# EUROPEAN PATENT APPLICATION

(11) **EP 1 762 885 A2**
(43) Date of publication of application: **14.03.2007**
(21) Application number: 06019103.8
(22) Date of filing: 12.09.2006
(51) Int. Cl.: G02F 1/1333, G02F 1/13, B60J 7/08

(54) **Light control device**

(30) Priority: 12.09.2005 JP 2005264378
(71) Applicant: Asahi Glass Company, Limited, Chiyoda-ku, Tokyo 100-8405 (JP)
(72) Inventor: Niiyama, Satoshi, Kanagawa-ku Yokohama-shi Kanagawa (JP); Tsushima, Hitoshi, Kanagawa-ku Yokohama-shi Kanagawa (JP); Ito, Hiroshige, Kanagawa-ku Yokohama-shi Kanagawa (JP); Takahashi, Kunihisa, Kanagawa-ku Yokohama-shi Kanagawa (JP)
(74) Representative: Müller-Boré & Partner Patentanwälte

(57) **Abstract**

In the light control device 10 according to one mode of the present invention, a plurality of liquid crystal optical elements 13 are arrayed between two transparent plates having a curved surface, and the liquid crystal optical elements 13 are bonded to a first transparent plate 11 by a gel, elastic, transparent resin layer 14. The liquid crystal optical elements 13 and the second transparent plate 12 have a sealed space 16 formed therebetween. By using the gel, elastic, transparent resin layer to fix only one side of each of the liquid crystal optical elements 13 to the first transparent plate 11, the liquid crystal optical elements 13 are fixed to the curved surface of the first transparent plate 11, and a stress is prevented from being transmitted to the liquid crystal optical elements 13.

## Description

The present invention is a light control device, in particular a light control device including an optical element disposed on a transparent plate, which is capable of changing a light transmissive state by electrical control.

There has been known a light control device including an optical element, which is electrically controlled to change a light transmissive state. Such a light control device has been used as an architectural material, such as a partition in a room, or an exterior window, since the device can control a light transmissive state so as to selectively open and block a user' sight. As the optical element used in such a light control device, there have been known an optical element employing an electrochromic element, and a liquid crystal optical element employing a liquid crystal polymer composite having a transmissive/scattering operation mode (see USP 5,188,760). Such a liquid crystal polymer composite controls light by using a refractive index difference between the polymer and the liquid crystal or domains in the liquid crystal.

As the light control device, into which a liquid crystal optical element employing a liquid crystal polymer composite is incorporated, there has been disclosed a light control device, which has two transparent plates disposed on both sides of an optical element (see JP-A-2-24630).

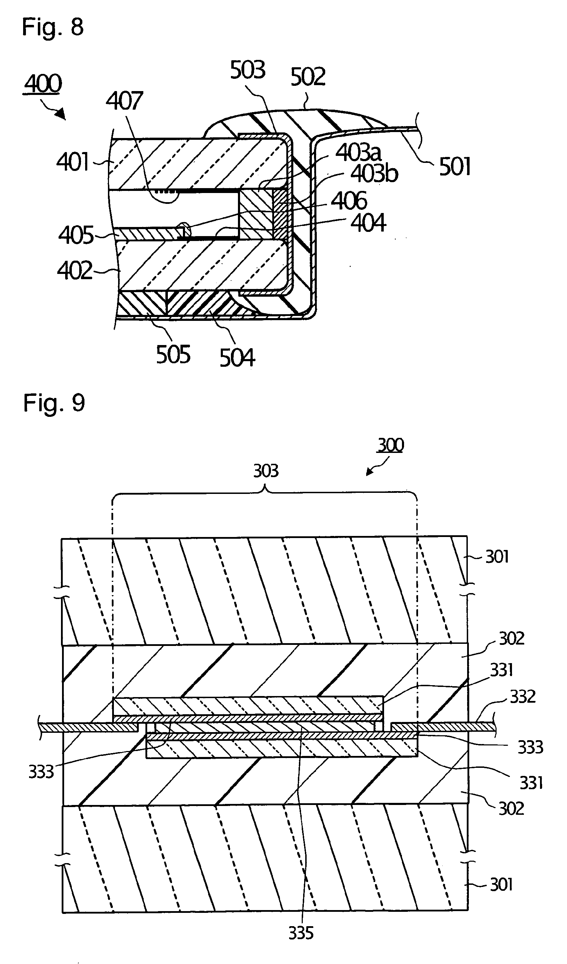

Fig. 9 is a schematic cross-sectional view showing the structure of the light control device disclosed in JP-A-2-24630 stated above. The light control device 300 comprises two transparent plates 301, a liquid crystal optical element 303 held in a gap between the transparent plates 301, and two polyvinyl butyral sheets 302 for sandwiching the liquid crystal optical element 303 therebetween.

The liquid crystal optical element 303 comprises two transparent substrates 331 having transparent electrodes 333 disposed thereon, a light control layer 335 sandwiched between the transparent substrates 331 and made of a liquid crystal polymer composite. The transparent electrodes 333 are connected to wiring 332 for connection with a controller and a power circuit, which are not shown. The light control device 300 is fabricated by laminating the liquid crystal optical element 303, the two transparent plates 301 and the polyvinyl butyral sheets to form a laminated structure, and defoaming the laminated structure under reduced pressure, followed by heating and pressurizing the laminated structure thus defoamed.

As another example of the light control device, there has been proposed a light control device, wherein a plurality of liquid crystal optical elements are sandwiched between two transparent plates (see JP-A-62-115416). JP-A-62-115416 discloses that the transmittance of visible light can be controlled by electrically connecting liquid crystal optical elements to solar batteries disposed at end portions of the two transparent plates, through transparent conductive films formed on the two transparent plates.

Although it is recently expected that the light control device employing such liquid crystal optical elements is applied to the sunroof of an automobile and the like, the application of the light control device has not been put into practice in the present circumstances in terms of heat resistance and impact resistance. Although a structure, wherein the liquid crystal optical elements 303 are held by two transparent plates 301 and two polyvinyl butyral sheets 302 as shown in Fig. 9, has been proposed in order to solve such a problem, a load is applied to the liquid crystal optical elements 303 by shrinkage, extension or the like caused in a polyvinyl butyral sheet 302, with the result that the alignment of the liquid crystal is disturbed to cause a problem in that the haze value of the liquid crystal increases.

When the transparent plates 301 are curved, there are caused problems in that air bubbles are likely to enter between each of the liquid crystal optical elements 303 and each of the polyvinyl butyral sheets 302 during the defoaming operation under reduced pressure, and that since the liquid crystal optical elements 303 trend to follow the curved transparent plates 301, a load is applied to the liquid crystal optical elements to disturb the alignment of the liquid crystal, increasing the haze value of the liquid crystal.

Although explanation has been made about a case where a plurality of liquid crystal optical elements are held between two transparent plates, the above-mentioned problems are also common to a case where a single liquid crystal optical element is held between two transparent plates or where liquid crystal optical elements are fixed to a single transparent plate. The problem of a stress is particularly important to liquid crystal optical elements. A similar problem can be also caused in a case where other optical elements, the transmissive property of which is electrically controlled, are used.

The present invention is proposed in consideration of the above-mentioned background. It is an object of the present invention to provide a light control device, which is appropriate as a member used in an opening of an automobile, a building or the like.

The present invention provides a light control device comprising a first plate and a second plate disposed so as to confront each other, at least one of both plates being transparent; a spacer sandwiched between both plates to ensure a sealed space between both plates; a bonding layer disposed on the first plate in the sealed space; and an optical element disposed on the bonding layer, the optical element being electrically controlled to change a light transmissive state; wherein the optical element is spaced from the second plate by a gap.

At least one of the first plate and the second plate may be curved.

The optical element may comprise a plurality of optical elements arrayed on the bonding layer.

The light control device may further comprise a light-shielding portion to conceal an edge of the optical element or optical elements from an observer's sight.

The bonding layer may comprise a transparent resin material having an elasticity.

The bonding layer may be a gel transparent resin comprising at least one of a silicone resin, an acrylic resin and a urethane resin.

It is preferred that the gel transparent resin have a 1/4 consistency of 5 to 800.

At least one of the first plate and the second plate may have a layer disposed thereon to block a heat ray and/or an ultraviolet ray.

At least one of the first plate and the second plate may have an electric heater disposed therein or thereon.

The light control device may further comprise a circulation system for circulating a gas in the sealed space.

The control device may be used as a member to be fitted into an opening formed in an automobile, a building or the like.

The first plate may be disposed on an interior side, and the second plate may be disposed on an exterior side.

The light control device may further comprise a partition wall disposed between adjacent optical elements to block an observer's sight.

The light control device may further comprise a controller for displaying at least one of a pattern, a character, a graphic form, a photograph and a picture on the optical element or optical elements.

In accordance with the present invention, the optical element and the second plate are spaced from each other through the gap. Accordingly, heat or impact, which is applied to the second plate from outside, can be prevented from being directly transmitted to the optical element through the second plate. Thus, it is possible to prevent the optical element from being damaged. The present invention is appropriately applicable to a member, which is used in an opening of an automobile or a building, and which is required to have heat resistance and impact resistance.

In the drawings:
Figs. 1(a) and (b) to (d) are a schematic view showing a case where the light control device according to an embodiment of the present invention is applied to the sunroof of an automobile, and plan views showing display examples in the light control device, respectively;
Figs. 2(a) and (b) are schematic perspective views showing the structure of the light control device according to the embodiment;
Fig. 3 is a cross-sectional view taken along line A-A' (B-B') of Fig. 2;
Fig. 4 is a schematic view showing the structure of the light control device according to another embodiment of the present invention, which includes a ventilation system or circulation system;
Fig. 5 is a schematic view showing a heating wire used in the light control device according to another embodiment of the present invention;
Fig. 6 is a cross-sectional view showing an example of the liquid crystal optical element according to an embodiment of the present invention;
Fig. 7 is a perspective view showing an example of the light control device according to the present invention;
Fig. 8 is a cross-sectional view showing a mounting structure for mounting the light control device to the body of an automobile;
Fig. 9 is a schematic cross-sectional view showing the structure of a conventional light control device;
Figs. 10(a) and (b) are a cross-sectional view showing another embodiment of the present invention and a plan view showing a partition wall in this embodiment; and
Fig. 11 is an exploded perspective view showing another embodiment of the present invention.

Now, embodiments, to which the present invention is applicable, well be described. The following description is made for the purpose of describing some of the embodiments of the present invention. The present invention is not limited to the embodiments described below. The dimensions of the respective members that will be described below and shown in the accompanying drawings are provided for convenience of description. The size proportion and the like of the respective members may be different from those of the respective members in an actual product.

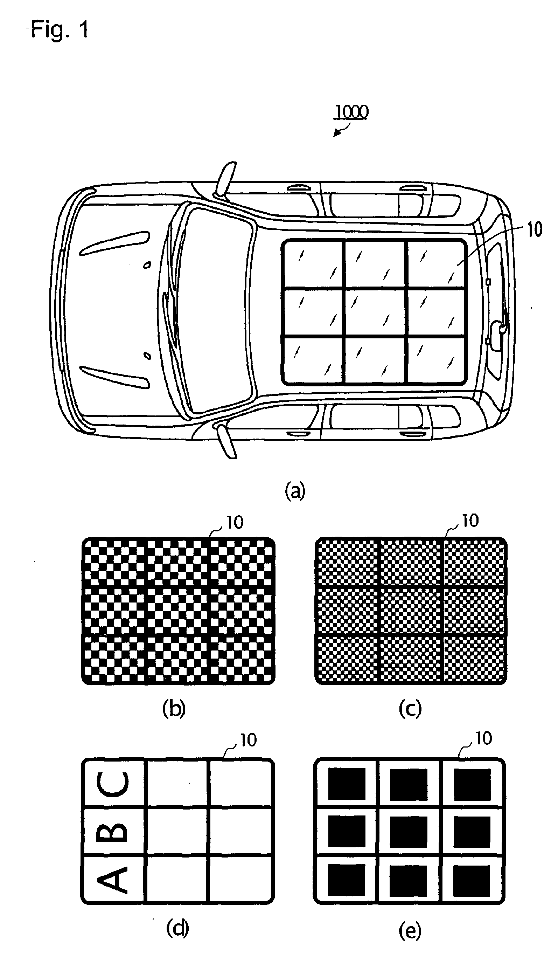

The light control device 10 according to an embodiment of the present invention is appropriate to a light-controllable sunroof for automobiles as shown in Fig. 1(a). An automobile 1000 includes the light control device 10, which comprises nine (=3x3) liquid crystal optical elements arrayed therein. Each of the liquid crystal optical elements has the amount of light transmission changed according to operation by an operator. The operator can set the light control device 10 in a transparent state to enjoy an outside view or incoming natural light, and also can cause the light control device to lose the transparency to reduce the amount of light transmission, enjoy an interior space filled with soft light, for example. When each of the liquid crystal optical elements includes matrix electrodes or electrodes having a specific pattern shape, various kinds of designs, characters, figures, photographs, pictures and the like can be displayed. Fig. 1(b) shows an example where a large checker pattern is displayed on the light control device 10, Fig. 1(c) shows an example where a small checker pattern is displayed on the light control device, Fig. 1(d) shows an example where alphabetical letters of A, B and C are displayed on the light control device, and Fig. 1(e) shows a case where rectangular shapes are displayed on the light control device. By properly selecting a display pattern, it is possible to have improvement in design and to control the amount of light coming into a car interior. The display pattern may comprise a still image or a moving image.

Now, description will be made about an appropriate case where the light control device 10 according to this embodiment is applied to the light-controllable sunroof for automobiles.

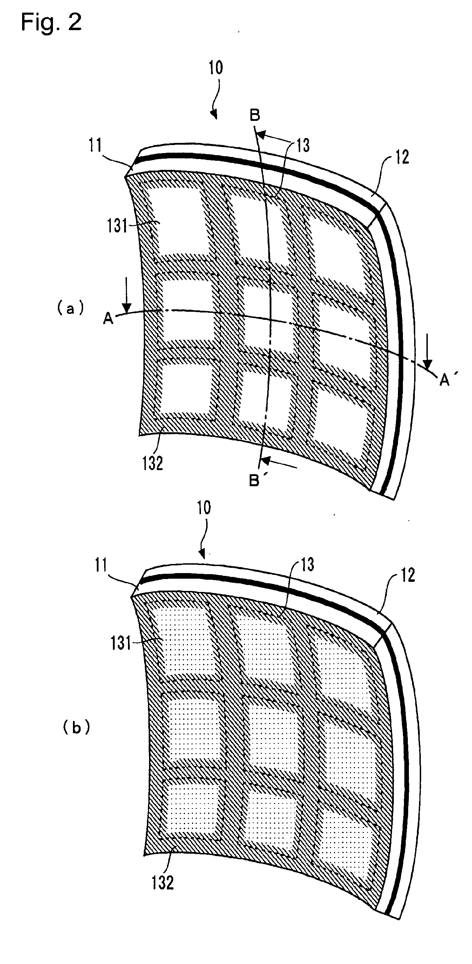

Fig. 2(a) and Fig. 2(b) are schematic perspective views showing the structure of the light control device 10 according to this embodiment. The light control device 10 is formed in a curved shape as a whole and has a concave side facing a car interior side and a convex side facing a car exterior side. The light control device 10 comprises a first transparent plate 11, a second transparent plate 12, and a plurality of liquid crystal optical elements 13 (shown by dotted lines) disposed between both transparent plates 11 and 12. The first transparent plate 11 and the second transparent plate 12 have dark ceramic layers (light-shielding portions 132) formed in a grid pattern on confronting sides thereof. The respective liquid crystal optical elements 13 are disposed so as to correspond to rectangular regions (light-control regions 131) without the light-shielding portions 132 formed therein.

The dark light-shielding portions 132 may be formed by applying paste ink on the transparent plates by screen printing and baking the paste ink, the paste ink containing colored ceramic particles. At least a portion of the boundaries of the light-shielding portions 132 may be printed in a dot shape to have a gradated design, for example. The color of the light-shielding portions 132 may be any one of the other colors than black, e.g. a color similar to the appearance of the liquid crystal optical elements in a light-scattering mode, such as white or gray. It is preferred that the light-shielding portions 132 have a larger width than the distance between the edges of adjacent liquid crystal optical elements 13.

Fig. 2(b) shows a case where the light control regions 131 are set in a light-scattering state, and the amount of light passing through the light control regions 131 is reduced. Although this embodiment is described about a case where the light control regions have such a mode that a light control regions is set in a light-transmissive state when no voltage is applied while a light control region is set in the light-scattering state when a voltage is applied, the light control regions may be configured so as to have, as required, such a reverse mode that a light control region is set in the light-transmissive state when a voltage is applied. It is preferred that the light control regions be configured to be capable of changing transmittance instead of having binary changes of transmission and scattering. For example, it is preferred that the light control regions be configured to have the transmittance variable in the range of from 100% to 10%.

The first transparent plate 11 and the second transparent plate 12 comprise rectangular curved members having substantially the same dimensions as each other and are disposed so as to confront each other. The first transparent plate 11 and the second transparent plate 12 function as a casing for protecting the liquid crystal optical elements 13 disposed in the light control device 10, and both plates comprise inflexible transparent plates. In particular, when the light control device is applied to a sunroof for automobiles, it is preferred that the first transparent plate 11 and the second transparent plate 12 comprise tempered glass for vehicles. The first transparent plate and the second transparent plate may be configured as laminated glass comprising two glass sheets laminated through a resin layer.

Each of the first transparent plate 11 and the second transparent plate 12 according to this embodiment has a three-dimensional curved surface. Each of both transparent plates is curved in two directions extending orthogonal to each other in this embodiment. It is possible to increase strength against an external force since each of the first transparent plate 11 and the second transparent plate 12 has such a curved surface as stated above. It is preferred that each of the first transparent plate 11 and the second transparent plate 12 have a thickness of 3 mm or above. Each of the first transparent plate 11 and the second transparent plate 12 may have dimensions of, e.g., 750 mm in width and 750 mm in length. Each of the liquid crystal optical elements 13 may have dimensions of, e.g., 240 mm in width and 240 mm in length. The light control device 10 may be configured to have a thickness of about 20 mm, for example.

The liquid crystal optical elements 13 are disposed in a gap between the first transparent plate 11 and the second transparent plate 12. In this embodiment, the rectangular liquid crystal optical elements 13 having substantially the same dimensions as each other are arrayed in a total number of nine, i.e., (three elements in length by three elements in width). The respective liquid crystal optical elements 13 are disposed so as not to overlap with one another so that the respective liquid crystal optical elements are visible through the first transparent plate 11 or the second transparent plate 12. The number of the optical liquid crystal elements 13, which are arrayed in the light control device 10, may be set at a desired total number, such as twelve elements comprising four elements in length by three elements in width, sixteen elements comprising four elements in length by four elements in width, twenty elements comprising five elements in length by four elements in width and twenty-five elements comprising five elements in length by five element in width, in addition to nine elements comprising three elements in length by three elements in width as shown in Fig. 2. The respective liquid optical elements may be at random fashion without being aligned in rows and columns. The structure of each of the liquid crystal optical elements 13 will be described in detail later.

Each of the light control regions 131 can be controlled so as to selectively have the light-transmissive state or the light-scattering state by electrical control. A user can visually recognize the light-transmissive state and the light-scattering state through the first transparent plate 11 or the second transparent plate 12. Fig. 2(a) is a schematic perspective view of the light control device 10 when no voltage is applied to the liquid crystal optical elements 13. The light control regions 131 are set in the light-transmissive state and are integrated with the first transparent plates 11 and the second transparent plate 12, looking like being a single piece of transparent glass.

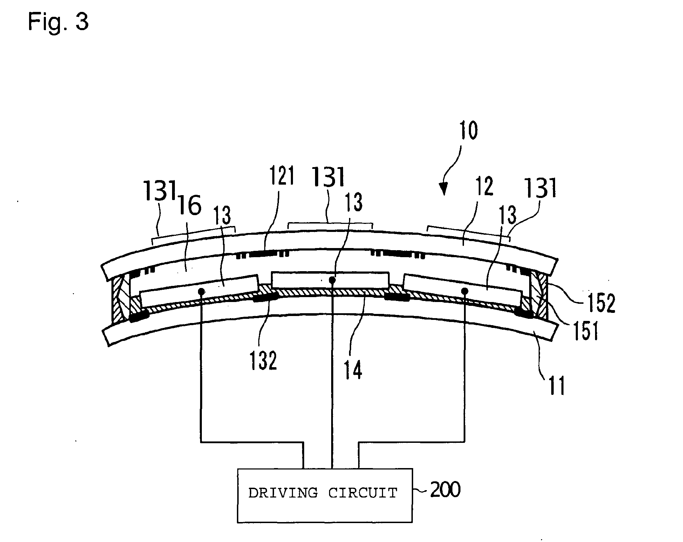

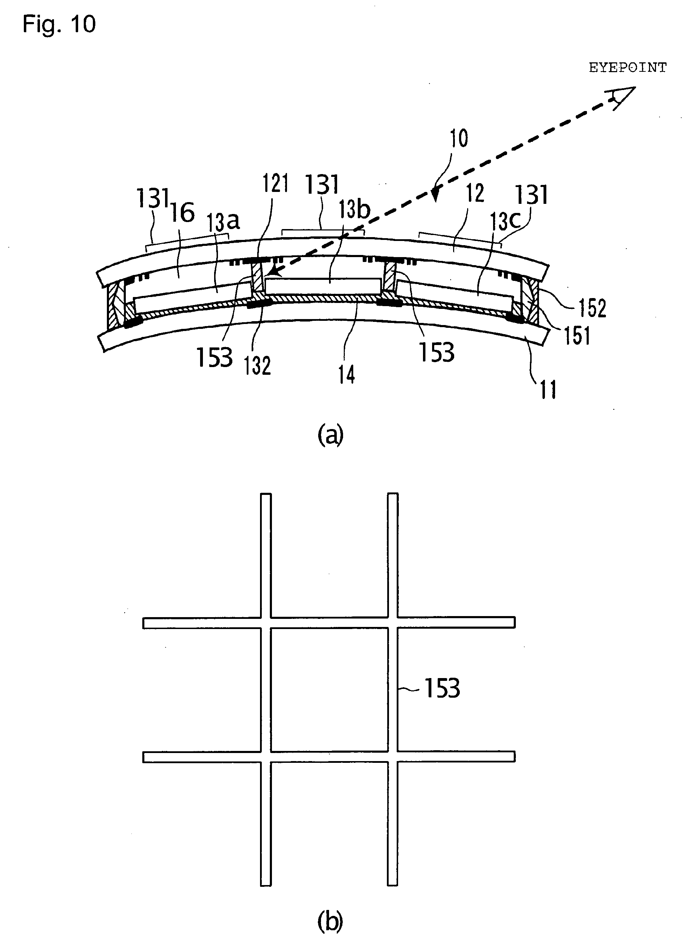

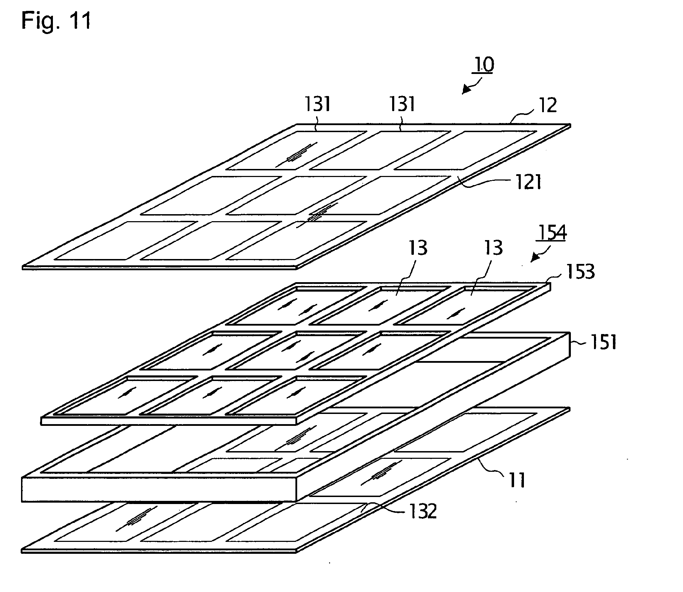

The first transparent plate 11 and the second transparent plate 12 have connection wiring (not shown) disposed on inner confronting sides thereof at positions overlapping with the dark light-shielding portions 132. In the liquid crystal optical elements 13, the connection wiring is electrically connected to transparent electrodes stated later. Each of the first transparent plate 11 and the second transparent plate 12 has a terminal portion (not shown) formed thereon to connect the connection wiring to a driving circuit 200 (see Fig. 3). The connection wiring is connected to the driving circuit 200 through the terminal portions. A voltage is applied to a liquid crystal optical element 13 through the connection wiring based on a signal from the driving circuit 200. Since the connection wiring is disposed on the portions overlapping with the light-shielding portions 132 stated above, the connection wiring is not visible from the car interior side, being advantageous in design. The connection wiring may be disposed in a partition wall 153 as described later (see Fig. 10(b) and 11). It should be noted that only the second transparent plate 12 may have a light-shielding portion 132 disposed on the inner side thereof confronting the first transparent plate 11.

Fig. 3 is a cross-sectional view taken along line A-A' of Fig. 2(a). A cross-sectional view taken along line B-B' of Fig. 2(a) is similar to Fig. 3. As shown in Fig. 3, the first transparent plate 11, the liquid crystal optical elements 13 and the second transparent plate 12 are disposed to confront one another so that the first transparent plate 11 is spaced from the liquid crystal optical elements 13 and that the second transparent plate 12 is also spaced from the liquid crystal optical elements 13. The first transparent plate 11 and the liquid crystal optical elements 13 have a transparent resin layer 14 (hereinbelow, referred to as the elastic, transparent resin layer 14) filled therebetween, the transparent resin layer having an elasticity. The elastic, transparent resin layer 14 is a bonding layer for fixing the first transparent plate 11 and the liquid crystal optical elements 13. Although the elastic, transparent resin layer 14 is filled between the first transparent plate 11 and the liquid crystal optical element 13, no elastic, transparent resin layer is filled between the second transparent plate 12 and the liquid crystal optical elements 13. The liquid crystal optical elements 13 are spaced from the second transparent plate 12 through a gap, and the second transparent plate 12 has the inner side exposed to a sealed space 16.

As shown in Fig. 3, the respective liquid crystal optical elements 13 are disposed on the convex side of the first transparent plate 11, and the surfaces of the liquid crystal optical elements close to the first transparent plate 11 are disposed along the curved surface of the first transparent plate 11. In other words, the normal directions of the surfaces of the respective liquid crystal optical elements 13 are not parallel with one another.

The first transparent plate 11 according to this embodiment has a three-dimensional curved surface and has the plural liquid crystal optical elements 13 disposed in two array directions (3x3=nine elements). The respective liquid crystal optical elements 13 are disposed along the curved surface of the first transparent plate 11. By this arrangement, it is possible not only to prevent the distance between the first transparent plate 11 and the second transparent plate 12 as well as the thickness of the light control device 10 from increasing or being unequal but also to reduce a possibility that the respective light control regions 131 look like being subjected to different light controls by the lens effect.

In order that the edges of the liquid crystal optical elements 13 can be prevented from being noticeable when a viewer outside a car observes the car interior side through a light control region 131, the second transparent plate 12 has a light-shielding portion 121 disposed on a car interior side thereof. Since the light-shielding portion 121 is spaced from the liquid crystal optical elements 13 by a certain distance, there is a possibility that the edge of a liquid crystal optical element 13 can be seen when observation is obliquely made. From this point of view, it is preferred that the light-shielding portion 121 have a larger width than the distance between the edges of adjacent liquid crystal optical elements 13, and that the light-shielding portion 121 have a larger width than the width of the light-shielding portion 132. Although the light-shielding portion 121 has a gradated region (a combination of dots) disposed on each of the ends in the width direction in Fig. 3, the light-shielding portion 121 may comprise a uniform region as in the light-shielding portion 132.

In accordance with the light control device 10 of this embodiment, it is possible to significantly improve the degree of freedom in design of the light control device by disposing the liquid crystal optical elements in a desired number. Thus, the light control device can be provided so as to meet various needs. Although it is not easy to fabricate a large liquid crystal optical element, it is easy to fabricate a large light control device by a combination of plural small liquid crystal optical elements as shown in Fig. 2(a) or another figure.

The elastic, transparent resin layer 14 is disposed between the confronting side of the first transparent plate 11 and the liquid crystal optical elements 13, and between adjacent liquid crystal optical elements 13. The sides of the liquid crystal optical elements 13 confronting the second transparent plate 12 are not covered with the elastic, transparent resin layer 14 so that the sealed space 16 is formed between the liquid crystal optical elements 13 and the second transparent plate 12. As described above, each of the liquid crystal optical elements 13 is bonded to the single transparent plate at only the single side thereof through the elastic, transparent resin layer 14. Accordingly, when each of the liquid crystal optical elements 13 is bonded to the first transparent plate 11, it is possible to reduce the damage given to each of the liquid crystal optical elements 13 in comparison with a case where each of the liquid crystal elements is bonded to both transparent plates at both sides thereof.

Even if an external force is applied to the second transparent plate 12, the external force is prevented from being directly transmitted to the liquid crystal optical elements 13. Thus, it is also possible to prevent the occurrence of a case where the alignment of the liquid crystal in each of the liquid crystal optical elements 13 is disordered to cause a problem in that the haze value of the liquid crystal in the light-transmissive state increases.

Even if the first transparent plate 11 is deformed, it is possible to prevent the characteristics of the liquid crystal optical elements 13 from being damaged since the elastic, transparent resin layer 14 serves as a buffer material to prevent a large stress from being applied to the liquid crystal optical elements 13. In particular, since the elastic, transparent resin layer 14 is filled in the gap between of the first transparent plate 11 and each of the liquid crystal optical elements 13, it is possible not only to easily bond the liquid crystal optical elements 13 to the first transparent plate 11 but also to restrain an undesirable stress from being applied to the liquid crystal optical elements 13, even if the first transparent plate is curved as in this embodiment.

From the viewpoint of effectively reducing the stress applied to the liquid crystal optical elements 13, it is preferred that the elastic, transparent resin layer 14 be made of a transparent resin material having a low modulus of elasticity. It is preferred that such a transparent resin material having a low modulus of elasticity have a glass transition temperature of 0°C or below, particularly -20°C or below. It is preferred that the transparent resin material have a modulus of elongation of 100 MPa or below, particularly 10 MPa, more particularly 1 MPa or below at normal temperature (25°C).

Examples of the elastic resin material include silicone, acryl and urethane. One of the preferred elastic, transparent resin materials is a silicone resin. A preferred example of the silicone resin is two-component type thermosetting silicone SE1885 (A/B) manufactured by Dow Corning Toray Co., Ltd. Although it is preferred from the viewpoint of characteristics stability at high temperatures that the resin material have a crosslinked molecular structure, the resin material may comprise a gel, transparent resin material, which is slightly flowable.

Another particularly preferred material for the elastic, transparent resin layer 14 is a transparent, gel resin material. Such a gel resin material is quite excellent at absorption of a stress in comparison with a harder, elastic resin material, such as a rubber resin material. Thus, it is possible to effectively restrain the characteristic degradation of the liquid crystal optical elements 13 since it is possible to effectively absorb a residual stress in the liquid crystal optical elements 13 caused by, e.g., a difference in heat expansion in a heat cycle test, or a stress caused by deformation in the first transparent plate 11.

When the elastic, transparent resin layer comprises a transparent, gel resin material, the elastic, transparent resin layer 14 comprising such a transparent, gel resin material has a consistency set at such a proper value that the liquid crystal optical elements 13 can be effectively fixed to the first transparent plate 11. In determination of the consistency of the gel, elastic, transparent resin layer 14, it is extremely important to consider the suppression of a stress applied to the liquid crystal optical elements 13 and a positional shift in the liquid crystal optical elements 13. From the viewpoint of restraining a stress from being applied to the liquid crystal optical elements 13 as much as possible, it is preferred that the consistency be high. However, when the consistency is too high, the liquid crystal optical elements 13 cannot be held, with the result that a positional shift occurs in the liquid crystal optical elements 13. From this point of view, it is preferred that the gel, elastic, transparent resin layer 14 have a 1/4 consistency of from 5 to 800 (Japanese Industrial Standard K2220). It is more preferred that the gel, elastic, transparent resin layer have a 1/4 consistency of from 10 to 500 (Japanese Industrial Standard K2220). The 1/4 consistency is a value, which shows, in the unit of ten millimeters, the depth of a prescribed circular cone entering a sample for a prescribed time, the prescribed circular cone being obtained by reducing a standard circular cone to 1/4.

Examples of the material for the gel, elastic, transparent resin layer 14 include silicone, acryl and urethane. From the viewpoint of restraining bubbles from being generated in the manufacturing process, it is preferred to use a silicone resin, which is a material having a low surface tension. A preferred example of the gel, silicone resin is two-component type curable silicone, which is in a gel state after curing. From the viewpoint of forming the cured resin layer in the sealed space, it is preferred to use two-component type curable silicone containing no volatile solvent, instead of one-component curable resin containing volatile solvent. For example, it is possible to form the elastic, transparent resin layer 14 by using two-component type thermosetting silicone SE1885 (A/B) manufactured by Dow Corning Toray Co., Ltd.

When the elastic, transparent resin layer 14 is obtained by thermosetting, it is more preferred that the curing temperature is in the temperature range for using the light control device 10. By setting the curing temperature in that temperature range, it is possible not only to reduce the occurrence of a residual stress caused by a difference in coefficient of thermal expansion between different members but also to decrease the stress applied to the liquid crystal optical elements 13. Although the residual stress gets serious as the light control device 10 is made larger, it is possible to effectively avoid the occurrence of this problem by using a resin material, which has a curing temperature in the temperature range for using the light control device 10.

The thickness of the elastic, transparent resin layer 14 to be filled is set at a proper value in terms of structural strength according to applications, a reduction in the stress applied to the liquid crystal optical elements 13 and another point of view. For example, the first transparent plate 11 is spaced from the liquid crystal optical elements 13 by a distance of 2 mm, and the elastic, transparent resin layer 14 is filled in the gap between the first transparent plate and each of the liquid crystal optical elements. The elastic, transparent resin layer 14 has such a bonding capacity that the liquid crystal optical elements 13 can be fixed to the first transparent plate 11. In Description, the word "fixed" covers not only a case where the liquid crystal optical elements are fixed so as to be substantially incapable of being separated from the first transparent plate but also a case where the liquid crystal optical elements are bonded so as to be capable of being separated from the first transparent plate by applying an external force having a certain strength or above.

Since the elastic, transparent resin layer 14 according to this embodiment is disposed on the entire surface between the first transparent plate 11 and each of the liquid crystal optical elements 13, it is possible to effectively restrain an external force to be applied to the entire surfaces of the light control regions through the first transparent plate 11 or the like, with the result that it is possible to prevent the respective light control regions from having different light control states. Although it is preferred that the elastic, transparent resin layer 14 have a high light-transmittance in the visible range, the elastic, transparent resin layer may selectively comprise a colorless transparent material or a colored transparent material according to designs. It is preferred that the elastic, transparent resin layer 14 have a refractive index close to the refractive index of the contacting surfaces of the liquid crystal optical elements 13 and the first transparent plate 11 so that the first transparent plate 11, the second transparent plate 12 and the liquid crystal optical elements 13 are integrated with one another, looking like being a single glass sheet.

The light control device according to this embodiment has a multilayer structure and is appropriate to a member to be fitted into an opening, such as an automobile sunroof or a building window. The first transparent plate 11 and the second transparent plate 12 are disposed so as to be spaced from each other, and the space between both transparent plates is sealed. The first transparent plate 11 and the second transparent plate 12 have a gas layer (made of e.g., air or an inert gas, such as argon gas, xenon gas or krypton gas) or a depressurized layer, such as a vacuum layer, formed therebetween. As shown in Fig. 3, the first transparent plate 11 and the second transparent plate 12 may have a spacer 151 of metal, such as aluminum, disposed therebetween at outer peripheral portions thereof so as to surround the plural liquid crystal optical element 13. The distance between the transparent plate 11 and the second transparent plate 12 can be kept constant by the spacer 151.

Around the outer periphery of the spacer is disposed a seal material 152, which comprises a first seal made of, e.g., butyl or Thiokol and a second seal around the outer periphery of the first seal for bonding. The space between the first transparent plate 11 and the second transparent plate 12 is sealed by the seal material. Between the liquid crystal optical element 13 and the second transparent plate 12 exists the sealed space 16, where a dry gas is filled, or a vacuum is created. Typically, a desiccant is put in the spacer 141. In consideration that the light control device 10 is likely to be thick because of having a structure as in a double glazing unit, a hard gasket may be mounted to a peripheral edge of the light control device, and a soft gasket may be disposed around the outer periphery of the hard gasket to fill the gap between an automobile body and the hard gasket when the light control device is assembled to the body.

As stated above, the first transparent plate 11 and the second transparent plate 12 have a multilayer structure, the space between both transparent plates is formed as the sealed space 16, and the gap is formed between the liquid crystal optical elements 13 and the second transparent plate 12 on the exterior side, preventing the external temperature from being directly transmitted to the liquid crystal optical elements 13 through the second transparent plate 12. Thus, it is possible to restrain the liquid crystal optical elements 13 between the first transparent plate 11 and the second transparent plate 12 from being subjected to temperature changes, with the result that it is possible to restrain the optical performance of the liquid crystal optical elements 13 from being lowered by temperature changes.

From the viewpoint of further restraining the sealed space between the first transparent plate 11 and the second transparent plate 12 as well as the liquid crystal optical elements 13 from being subjected to temperature changes, it is preferred that the second transparent plate 12 have an exterior surface coated with a Low-E (Low Emission) film. Such a Low-E film may be prepared by laminating metal films made of, e.g., silver, and such a film can reduce the surface emissivity and blocks infrared light to have a heat-shield property.

It is preferred that the second transparent plate 12 have an ultraviolet protection layer disposed on a surface thereof (optimally the surface thereof close to the liquid crystal optical element 13) in order to prevent the nature of the liquid crystal material from being changed by ultraviolet light. It is preferred that the ultraviolet protection layer have a steep ultraviolet blocking property for wavelength having 400 nm or below. It is preferred that the material for the ultraviolet protection layer be selected in order to steeply block incident light having a wavelength of 410 nm or below according to the kinds of the liquid crystal material used in the device. The ultraviolet protection layer may be configured to absorb incident light having a longer wavelength in such a range that the appearance quality of the liquid crystal optical elements 13 is prevented from being degraded. Each of the liquid crystal optical elements 13 may have an ultraviolet protection layer disposed on the surface thereof without contact with the first transparent plate 11 (the surface thereof close to the second transparent plate 12).

When the first transparent plate 11 has an antireflective coating disposed on the outer surface thereof (the surface thereof remote from the liquid crystal optical elements 13), the transmittance of the liquid crystal optical elements 13 in the light transmissive state can be improved. The antireflective coating may be disposed by utilizing a sputtering method or a vapor deposition method to form a thin film of silicate or a metal oxide directly on the outer surface so as to have a certain film thickness or bonding a resin thin film to the outer surface through, e.g., an adhesive layer, the resin thin film having a low refractive index, such as a fluorine resin. It is particularly preferred in terms of stainproof property and easy-to-clean property that the outermost layer of the first transparent plate comprises a fluorine resin.

Although another optical member in addition to the elastic, transparent resin layer 14 may be disposed between the liquid crystal optical elements 13 and the first transparent plate 11, it is preferred that no air layer be formed between the liquid crystal optical elements 13 and the first transparent plate 11. By adopting such arrangement, it is possible to restrain light from being reflected by a change in the refractive index between adjacent layers.

In the light control device 10 having such a multilayer structure, the sealed space 16 between the first transparent plate 11 and the second transparent plate 12 is ventilated in another preferred embodiment. The air used for ventilation may comprise outdoor air, which is taken into the sealed space without being subjected to treatment or is taken into the sealed space, being temperature-controlled by an air conditioner or a heater. By adopting such arrangement, it is possible to restrain the temperature in the sealed space between the transparent plates as well as the temperature of the liquid crystal optical elements 13 from increasing in the summer, with the result that it is possible to restrain the optical properties of the liquid crystal optical elements 13 from being degraded. When warm air is ventilated in the winter, it is possible to restrain the response speed of the liquid crystal from being lowered.

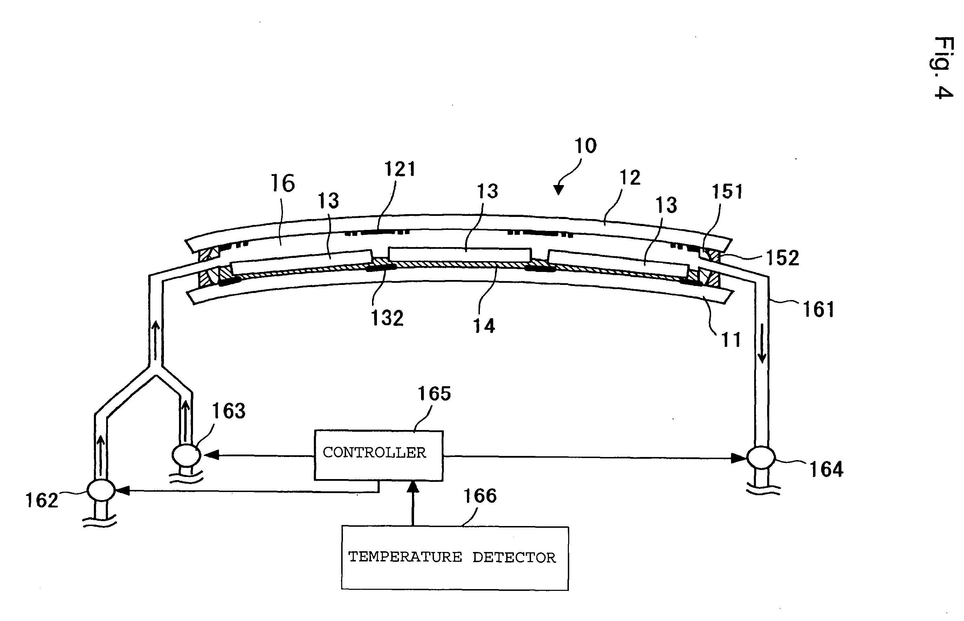

For example, the light control device 10 includes a ventilation pipe 161, a first ventilation valve 162, a second ventilation valve 163, a third ventilation valve 164, a controller 165 for controlling the opening and closing operation of each of the ventilation valves 162, 163 and 164, and a temperature detector 166 as shown in Fig. 4. The first ventilation valve 162 serves as a valve for normal ventilation. For example, air in the car is supplied into the sealed space 16 between the first transparent plate 11 and the second transparent plate 12 through an air filter (not shown) and the first ventilation valve 162.

The second ventilation valve 163 serves as a valve for supply of warm air. Warm air, which is heated by, e.g., a heater (not shown), is supplied into the sealed space 16 between the first transparent plate 11 and the second transparent plate 12 through the second ventilation valve 163. The supplied warm air may comprise air heated by a heater provided in the car or heated by use of heat generated by the engine in operation. The third valve 164 serves as a valve for discharge to discharge gas from the sealed space 16 to outside. It is preferred that the gas to be used for ventilation be dry gas.

The controller 165 controls the opening and closing operation of each of the ventilation valves 162, 163 and 164, depending on the temperature detected by the temperature detector 166. The temperature detector 166 is typically disposed at a position in the car. For example, when the temperature detected by the temperature detector 166 is higher than a preset high reference temperature, the controller 165 opens the first valve 162 and the third valve 164 to ventilate the sealed space 16 between the first transparent plate 11 and the second transparent plate 12.

When the detected temperature is lower than a preset low reference temperature, the controller 165 opens the second valve 163 and the third valve 164 to provide the light control device 10 with warm ventilation. In such a normal state that the detected temperature is out of these temperature ranges, the ventilation valves 162, 163 and 164 are all closed. By ventilating the light control device 10 according to the ambient temperature as stated above, it is possible to maintain the optical characteristics of the light control device 10 at a certain level or above, regardless of a change in the ambient temperature.

Although the above-mentioned light control device having such a multilayer structure is configured to ventilate the sealed space 16 to restrain the optical characteristics from being varied by a change in the ambient temperature, one or both of the first transparent plate 11 and the second transparent plate 12 may have a heating wire disposed thereon or therein as another preferred embodiment. The heating wire may comprise a nichrome wire or a conductive heating wire prepared by baking a pattern made of silver paste. By this arrangement, the inside of the first transparent plate 11 or the second transparent plate 12 can be heated to improve the response speed of the liquid crystal in the winter.

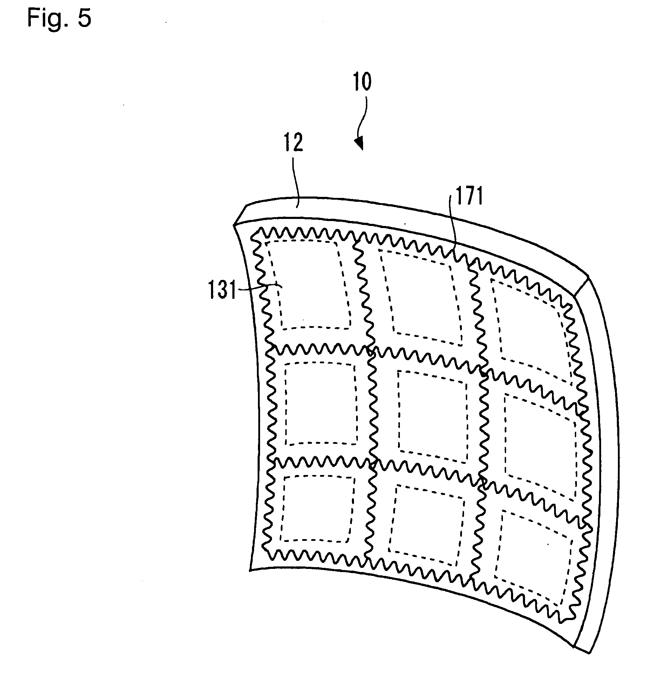

The light control device may be configured to dispose a heating wire 171 on the inner confronting side of the second transparent plate 12 (the side of the second transparent plate close to the liquid crystal optical elements 13) as shown in Fig. 5. It is preferred that the heating wire 171 be disposed on the light-shielding portion 121 or that a heating wire be disposed on the side of the first transparent plate 11 remote from the sealed space 16 so as to confront the light-shielding portion 132. Since the heating wire 171 or the heating wire on the first transparent plate can be heated to increase the temperature in the sealed space between the transparent plate 11 and the second transparent plate 12 as well as the temperature of the liquid crystal optical elements 13 disposed in the space, it is possible to restrain the response speed of the liquid crystal from being lowered even if the ambient temperature is low.

The power supply control for the heating wire 171 may be performed by, e.g., the controller based on the temperature detected by the temperature detector as described in reference to Fig. 4. When the temperature detected by the temperature detector is lower than a preset reference temperature, the controller supplies preset power to the heating wire 171 or the other heating wire. The above-mentioned ventilation control or heater control may be performed by an operator.

Such a heating wire 171 may be disposed on the inner confronting side of the first transparent plate 11 (the side of the first transparent plate close to the liquid crystal optical elements 13). In this case as well, it is preferred that the heating wire 171 be disposed so as to overlap with the light-shielding portion 132 in order to prevent a light control function and a cosmetic appearance from being damaged. When there is a possibility that a liquid crystal optical element 13 is adversely affected by the heat given from the heating wire 171, it is preferred that the heating wire 171 be disposed on the second transparent plate 12, which is spaced from the liquid crystal optical elements 13.

Although the heating wire or the heating wires are disposed in the light control device having a multilayer structure in this embodiment, a heating wire may be disposed in a light control device comprising a single transparent plate and liquid crystal optical elements disposed thereon. For example, a device comprising a display element having a memory effect, such as a chiral nematic liquid crystal, may have a heating wire to improve the response speed of the liquid crystal at low temperatures as in the light control device according this embodiment.

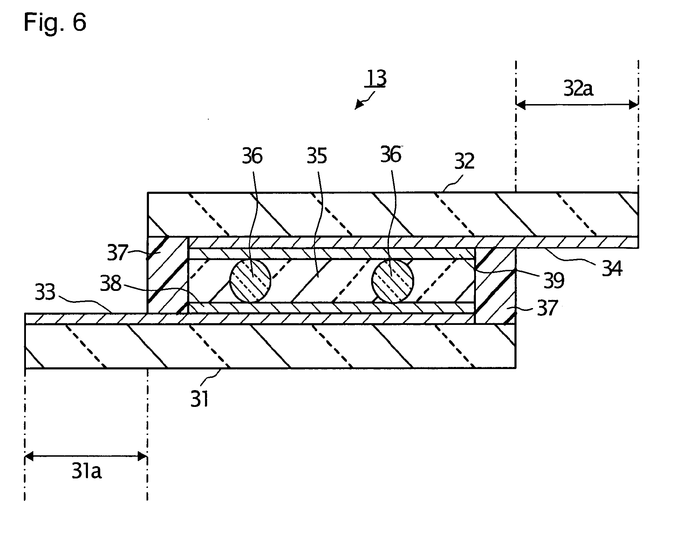

Now, the structure of each of the liquid crystal optical elements 13 will be described. Fig. 6 is a schematic cross-sectional view showing an example of the structure of each of the liquid crystal optical elements 13 according to an embodiment of the present invention. As shown in this figure, each of the liquid crystal optical elements 13 according to this embodiment comprises a first transparent substrate 31, a second transparent substrate 32, a first transparent electrode 33, a second transparent electrode 34, a light control layer 35, spacers 36, a peripheral seal 37, a first alignment film 38, a second alignment film 39 and other elements.

The first transparent substrate 31 and the second transparent substrate 32 comprise rectangular transparent substrates having substantially the same dimensions as each other and are disposed so as to confront each other, being spaced from each other by a certain gap. The first transparent substrate 31 and the second transparent substrate 32 are disposed to be shifted in parallel so that each of the transparent substrates has a non-confronting area in the vicinity of one side thereof. In other words, the first transparent substrate 31 has a first non-confronting area 31a disposed in the vicinity of one side thereof so as not to confront the second transparent substrate 32, and the second transparent substrate 32 has a second non-confronting area 32a disposed in the vicinity of one side thereof so as not to confront the first transparent substrate 31. Each of the first non-confronting area 31a and the second transparent substrate 32 has connection wiring (not show) fixed thereon.

It is preferred in terms of obtaining high quality optical characteristics that each of the first transparent substrate 31 and the second transparent plate 32 comprise an inflexible substrate made of transparent glass. Each of the transparent substrates may comprise an inflexible resin substrate made of, e.g., polyester, or a film substrate. Although explanation has been made about a case where each of the first transparent substrate 31 and the second transparent substrate 32 is formed in a rectangular shape, each of the transparent substrates may be formed in a different shape, such as a circular shape. The first transparent electrode 33 and the second transparent electrode 34 are disposed in respective patterns on confronting areas of the main sides of the first transparent substrate 31 and the second transparent substrate 32, respectively. Each of the first transparent electrode 33 and the second transparent electrode 34 may comprise, e.g., a metal oxide film, such as ITO (indium tin oxide) or tin oxide.

The first transparent electrode 33 and the second transparent electrode 34 have the first alignment film 38 and the second alignment film 39 disposed, respectively, thereon in contact with the light control layer 35 so as to align the liquid crystal in the light control layer 35. The first alignment film 38 and the second alignment film 39 play a role in aligning the liquid crystal in a direction perpendicular to the substrate surfaces. It is acceptable to dispense with such an alignment film. For example, the surface of the first transparent electrode 33 or the second transparent electrode 34 may be directly polished or be provided with a function of aligning the liquid crystal.

The first transparent substrate 31 and the second transparent substrate 32 have the light control layer 35 as an electro-optical layer and the spacers 36 sandwiched therebetween as shown in Fig. 6. The thickness of the light control layer 35 sandwiched between both substrates is determined by the spacers 36. The spacers 36 may comprise, e.g., glass particles, resin particles, glass fibers, films or spacers prepared by a photolithographic method.

When the light control layer comprises a liquid crystal polymer composite layer as in this embodiment, the thickness of the light control layer 35 is typically from 1 to 50 µm. The polymer contained in the light control layer 35 comprises a combination of plural column-like resin materials. The liquid crystal, which is one of the components of the light control layer 35, is configured so that the alignment direction of the liquid crystal in the light transmissive state substantially accords with the normal line direction of a substrate surface. By aligning the liquid crystal perpendicularly, it is possible to keep the light transmissive state of the liquid crystal optical elements in a better way. In this embodiment, when no voltage is applied across the first transparent electrode 33 and the second transparent electrode 34, the liquid crystal is aligned so as to have the light transmissive state.

On the other hand, when a voltage is applied across the first transparent electrode 33 and the second transparent electrode 34, the liquid crystal is aligned at random to have the light-scattering state by the electric field generated between both electrodes. Since the light-scattering state and the light transmissive state can be selectively controlled by application or non-application of a voltage as stated above, a desired image can be displayed according to the pattern formed by a combination of the first transparent electrode 33 and the second transparent electrode 34.

The liquid crystal may comprise a nematic liquid crystal, a cholesteric liquid crystal, a smectic liquid crystal, a ferroelectric liquid crystal or the like. The nematic liquid crystal is preferred in terms of making the operating temperature range of the liquid crystal element wider and making the response speed faster because of having a wider liquid crystal temperature range and a lower viscosity than the other kinds of the liquid crystal. When the dielectric anisotropy of the liquid crystal is negative, the liquid crystal is used to be perpendicular aligned.

As the liquid crystal compound, various kinds of compounds usable as commonly used materials for display or materials for an electric field driving type display element may be used. Specific examples of the liquid crystal compound include biphenyl type, phenyl benzoate type, cyclohexylbenzene type, azoxybenzene type, azobenzene type, azomethine type, terphenyl type, biphenyl benzoate type, cyclohexylbiphenyl type, phenylpyridine type, cyclohexylpyrimidine type and cholesterol type compound. The liquid crystal compound may comprise a combination of at least two liquid crystal compounds.

The light control layer 35 may contain various chemical compounds. For example, in order to improve the contrast, various dichroic pigments, such as anthraquinone type, styryl type, azomethine type or azo type compound, may be used. Further, an antioxidant, an ultraviolet absorber or various kinds of plasticizer may be preferably used in terms of improvement in stability and durability. The light control layer 35 may be produced from a compound liquid of the precursor of the light control layer (hereinbelow, referred to simply as "compound liquid"). It is important to form the light control layer 35 having a good optical function via a phase separation process from the compound liquid. The phase separation structure means the inner structure of the liquid crystal cell, which is formed via the phase separation process, and which can achieve electro-optical characteristics and performance.

The fine form of the phase separation structure of the liquid crystal polymer composite can be changed in various manners, depending on the kind, the nature, the mixing ratio and the like of compounds constituting the compound liquid of the precursor of the light control layer 35. The combination and the mixing ratio of the materials are determined in consideration of optical characteristics, the magnitude of a driving voltage and a required reliability. The compound liquid of the precursor may comprise a liquid crystal compound and a polymerizable compound.

Although the light control device according to the embodiments is particularly appropriate to the sunroof of an automobile, the light control device may be applicable to another application. For example, the light control device is applicable to a window (for automobiles, such as a side windshield, a door glass, or a rear quarter panel, for buildings, for airplanes, for ships, for railroad cars and the like), a building interior or exterior material, such as a skylight, a partition or a door, a signboard, a medium for advertisement, a large partition system and the like. When the light control device is applied to a door of a refrigerator, it is possible to see food contained in the refrigerator without opening the door. The light control device may be configured to display a combination of graphic forms or patterns, or display a character or the like to provide information to a user. A character or the like may be depicted on a transparent plate as required.

The first transparent plate 11 and the like may comprise a proper material, such as glass or polycarbonate, depending on the installation site or the application of the light control device 10. It is preferred in terms of making the control device lighter that the first transparent plate or the like be made of a resin. In, e.g., a case where the light control device is installed at a public place, it is preferred that the first transparent plate or the like comprise a glass sheet, which is unlikely to have the surface scratched and is superior at strength. The first transparent plate or the like may comprise normal tempered glass produced by an air-cooled tempering method or a chemical tempering method. The first transparent plate 11 and the second transparent plate 12 may be formed in different shapes according to the application of the light control device. The light control device 10 may have no multilayer structure or have no second transparent plate 12, if not necessary.

It should be noted that the light control device 10 shown in Fig. 1 is an example of the light control device according to the present invention, and that the present invention is not limited to the light control device shown in Fig. 1. For example, the liquid crystal optical elements 13 may be disposed in at least one portion in the gap between the first transparent plate 11 and the second transparent plate 12. The light control regions 131 of the respective liquid crystal optical elements 13 may be formed in different shapes for the respective liquid crystal optical elements 13. The light control region 131 of each of the liquid crystal optical elements 13 does not need to be a single region and may be divided into plural sections. Each of the light control region 131 may be formed in any shape, such as a circular shape, or in any pattern, such as a symbol or characters showing the logo of a company.

Although the above-mentioned embodiments have been described about a case where each of the optical elements comprises a liquid crystal optical element formed from a liquid crystal polymer composite so as to have a transmissive/scattering operation mode, each of the optical elements is not limited to such a liquid crystal optical element. Each of the optical elements may comprise, e.g., one of the optical element stated below. Specifically, each of the optical elements may comprise a transmittance-variable type liquid crystal optical element with a liquid crystal combined with a polarization film, a transmittance-variable type liquid crystal optical element comprising a liquid crystal added with a dichroic colorant, an electrochromic optical element using an electrochromic material, an electrophoretic optical element utilizing an electrophoresis phenomenon, or the like. Although each of the liquid crystal elements 13 comprises a liquid crystal panel fabricated by using glass substrates in the above-mentioned embodiments, each of the liquid crystal elements may comprise a film liquid crystal panel fabricated by, e.g., a resin film.

Now, other embodiments of the present invention will be described.

Figs. 10(a) and (b) are a cross-sectional view showing another embodiment of the present invention and a plan view showing the partition wall according to this embodiment. Although the light-shielding portions 121 and 132 are disposed to conceal the edges of the liquid crystal optical elements 13 from the eyes of an observer outside the car or a driver in the structure shown in Fig. 3, the edge of a liquid crystal optical element is visible in a case where such an observer's or a driver's eyes are set at a small angle to a transparent plate. In order to solve this problem, the light-shielding portions are configured so as to have a larger width to cover the edges of the liquid crystal optical elements 13 as widely as possible. However, in this case, the light-shielding portions are made noticeable, which is not preferred in terms of automobile design. Since in particular, the second transparent plate 12 is quite apart from the respective liquid crystal optical elements 13a to 13c, there is a problem that an observer outside the car can easily see an edge.

From this point of view, the partition wall 153 is disposed so as to extend between adjacent liquid crystal optical elements to solve this problem. The partition wall 13 comprises a grid-like part prepared from, e.g., metal, such as aluminum, or a resin. The partition wall may be formed in the shape shown in Fig. 10(b) when viewed from above and is disposed so as to conform with the light-shielding portions 121 and 132. As shown in Fig. 10(a), an observer cannot see the edge of the liquid crystal optical element 13a since the sight from an eyepoint is shielded by the partition wall 153.

Fig. 11 is an exploded perspective view showing another embodiment of the present invention. The light control device 10 comprises a double-glazing unit formed by a first transparent plate 11, a second transparent plate 12, a spacer 151 and the like, and an LCD unit 154 fabricated by mounting plural liquid crystal optical elements 13 to a partition wall 153. The LCD unit 154 and the first transparent plate 11 are fixed together by an elastic, transparent resin layer (not shown). When the plural liquid crystal optical elements are unified in advance as stated above, it is easy to assemble the light control device 10. The wires led out from the respective liquid crystal optical elements 13 are disposed in gaps formed in the partition wall 153.

### EXAMPLE

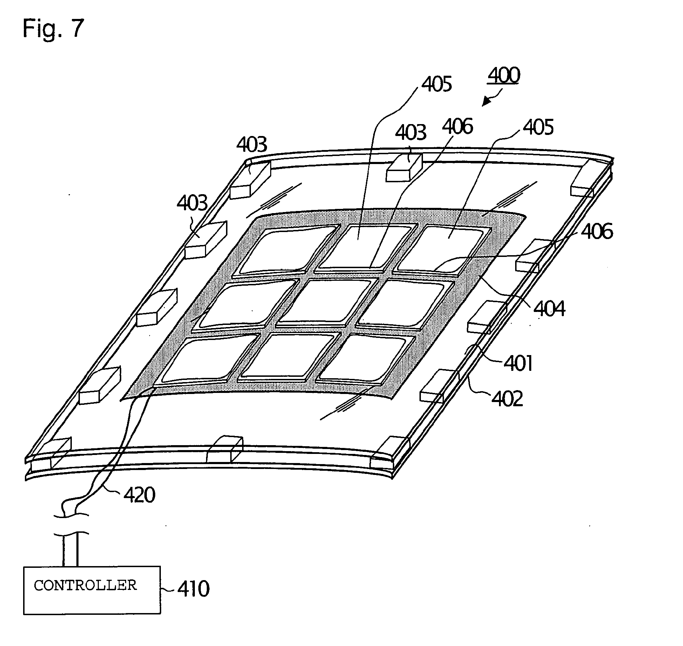

Fig. 7 is a perspective view showing an example of the light control device according to the present invention. As shown in this figure, the light control device 400 comprises two glass plates 401 and 402, plural spacers 403 for keeping the gap between both glass plates constant, plural liquid crystal optical elements 405 disposed on a top side of the glass plate 402, a controller 410 for driving the liquid crystal optical elements 405 and the like. The top side of the glass plate 402 has a pattern 404 disposed in a grid shape thereon. Transparent silicone is used to fix totally nine of the liquid crystal optical elements 405 to the top side so as to mate with the openings of the grid-like pattern. Each of the glass plates 401 and 402 comprises an air-cooled tempered glass plate, which has the dimensions of 400 mm x 564 mm x 4 mm, and which is subjected to bending treatment (is formed in a single curved shape) so as to have a radius of curvature of 900 mm along a right-to-left direction in this figure.

The glass plates 401 and 402 are spaced from each other by a gap of 7 mm. In order to keep the gap between both glass plates, the spacers 403, each of which is prepared by bending seven pieces of a two-sided tape comprising an acrylic base material and having a thickness of 1 mm (manufactured by 3M: Y-4910J), are disposed totally at twelve locations along the peripheral edges of the glass plates. Each of the liquid crystal optical elements 405 has dimensions of 100 mm square and a thickness of 2.2 mm.

Now, the procedure for affixing the liquid crystal optical elements 405 to the glass plate 402 will be described. Two pieces of the two-sided tape, which was used for preparing the spacers 403, were bonded together and were cut in sections having about 2 mm square, sections were bonded the four corners of each of the liquid crystal optical elements 405, and the liquid crystal optical elements were bonded on the top side of the glass plate 402 by the bonded sections. Silicone was fully filled in the gap between each of the liquid crystal optical elements and the glass plate 402. The pattern 404 was prepared from a black primer (manufactured by the YOKOHAMA Rubber Co., Ltd.: HAMATITE G (MS-90)). Although it is preferred that a similar pattern be disposed on a lower side of the glass plate 401 so as to confront the pattern 404, such a similar pattern was not disposed in this example.

Silicone (manufactured by Dow Corning Toray Co., Ltd.: SE-960) was applied to dispose a seal 406 along the four sides of each of the liquid crystal optical elements 405 in order to prevent the silicone filled in between the glass plate 402 and each of the liquid crystal optical elements 405 from leaking out. It should be noted that one side of the outer periphery of each of the liquid crystal optical elements 405 was kept open for injection of a silicone resin and was closed by applying the silicone after injection. In order to prevent the seal 406 around each of the liquid crystal optical elements from being noticeable, a razor was used to cut an upper protruding portion of the seal so as to be difficult to be seen even if the seal was obliquely observed.

The controller was electrically connected to the respective liquid crystal optical elements 405 through a code 420 and unshown wiring for connection of the liquid crystal optical elements 405. The controller 410 was a. normal controller, which had an input of AC 100V and a variable voltage range of 0 to 50 V, and which generated a rectangular waveform having a variable frequency range of 30 to 200 Hz. The transmissive/scattering state of each of the liquid crystal optical elements 405 was controlled by this controller.

As stated above, the inventors fabricated the light control device 400 having a double-glazing unit and tested the control device by changing the transmissive/scattering state of the liquid crystal optical elements or performing another test. The inventors affirmed that the control device was able to serve as a light-controllable window. Since the response speed of the liquid crystal optical elements 405 used in this example was faster than commonly used liquid crystal panels having a transmissive/scattering operation mode, this type of liquid crystal optical elements were used to realize a light-controllable window, which was capable of instantly switching the transmissive/scattering state. Although such a simple part was used to form the spacers 403 in this example, it is preferred that metal spacers and butyl rubber pieces were used to form a sealed space in a region with each of the liquid crystal optical elements 405 disposed therein when the light control device was actually applied to a window. Such a sealed space may be configured to communicate with, e.g., a blower to supply warm air, dry air or another gas to the sealed space.

Fig. 8 is a cross-sectional view showing an example of the mounting structure for mounting the light control device 400 to the body of an automobile. When the light control device 400 is mounted to an automobile, the following structure may be adopted. The light control device 400 comprises glass plates 401 and 402 bonded together through a metal spacer 403a. The glass plate 401, which is positioned on the car exterior side, has an interior side formed with a pattern 407 in order to prevent the edges of the liquid crystal optical elements 405 from being visible when observation is made from outside the automobile. The pattern 407 is formed by baking a dark ceramic material on the glass plate 401 (a so-called black ceramic). In this Example, the pattern includes non-gradated areas, and gradated areas comprising a combination of dots.

A pattern 404 is also disposed on the car exterior side of the glass plate 402 to provide a structure wherein the edges of the liquid crystal optical elements 405 mounted to the glass plate 402 can be prevented from being visible to a driver or a passenger in the automobile. As described in reference to Fig. 7, each of the liquid crystal optical elements 405 is bonded by transparent silicone; and a silicone seal 406 is disposed on the four sides of each of the liquid crystal optical elements 405 to prevent the transparent silicone from leaking out during injection at the time of bonding each of the liquid crystal optical elements.

Since the spacers 403 shown in Fig. 7 are just simple ones, it is preferred to use, e.g., the structure shown in Fig. 8. Specifically, it is preferred that the spacer 403a, which comprises a metal tube with a desiccant (not shown) sealed therein, be sandwiched between the two glass plates 401 and 402 through a primary seal comprising butyl rubber (not shown), and that the spacer 403a have a silicone type or polysulfide type secondary seal disposed around the outer periphery thereof.

The control device 400 is fixed, through an adhesive 504, to an opening flange 501 formed in the body of the automobile. Between the opening flange 501 and the glass plate 402 is disposed a dam wall 505 made of, e.g., a foamed resin, in order to prevent the adhesive 504 from leaking. The edge of the light control device 400 is covered with a gasket 503 made of metal or a hard resin. An elastic resin molding 502, which is made of, e.g., TPO (olefin type thermosetting elastomer), is fixed between the opening flange 501 and the gasket 503 by, e.g., two-sided tapes (not shown). The wiring, which connects between each of the liquid crystal optical elements 405 and the controller 401 shown in Fig. 7, may be led out through a through hole formed in the glass plate 402 or may be led out through a through hole formed in the spacer 403a.

The entire disclosure of Japanese Patent Application No. 2005-264378 filed on September 12, 2005 including specification, claims, drawings and summary is incorporated herein by reference in its entirety.

## Claims

1. A light control device comprising
a first plate and a second plate disposed so as to confront each other, at least one of both plates being transparent;
a spacer sandwiched between both plates to ensure a sealed space between both plates;
a bonding layer disposed on the first plate in the sealed space; and
an optical element disposed on the bonding layer, the optical element being electrically controlled to change a light transmissive state;
wherein the optical element is spaced from the second plate by a gap.

2. The light control device according to Claim 1, wherein at least one of the first plate and the second plate is curved.

3. The light control device according to Claim 1 or 2, wherein the optical element comprises a plurality of optical elements arrayed on the bonding layer.

4. The light control device according to any one of Claims 1 to 3, further comprising a light-shielding portion to conceal an edge of the optical element or optical elements from an observer's sight.

5. The light control device according to any one of Claims 1 to 4, wherein the bonding layer comprises a transparent resin material having an elasticity.

6. The light control device according to Claim 5, wherein the bonding layer is a gel transparent resin comprising at least one of a silicone resin, an acrylic resin and a urethane resin.

7. The light control device according to Claim 6, wherein the gel transparent resin has a 1/4 consistency of 5 to 800.

8. The light control device according to any one of Claims 1 to 7, wherein at least one of the first plate and the second plate has a layer disposed thereon to block a heat ray and/or an ultraviolet ray.

9. The light control device according to any one of Claims 1 to 8, wherein at least one of the first plate and the second plate has an electric heater disposed therein or thereon.

10. The light control device according to any one of Claims 1 to 9, further comprising a circulation system tc circulate a gas in the sealed space.

11. The control device according to any one of Claims 1 to 10, which is used as a member to be fitted into an opening formed in an automobile, a building or the like.

12. The control device according to Claim 11, wherein the first plate is disposed on an interior side, and the second plate is disposed on an exterior side.

13. The light control device according to Claim 3, further comprising a partition wall disposed between adjacent optical elements to block an observer's sight.

14. The light control device according to any one of Claims 1 to 13, further comprising a controller for displaying at least one of a pattern, a character, a graphic form, a photograph and a picture on the optical element or optical elements.
